# EUROPEAN PATENT APPLICATION

(11) **EP 2 881 550 A1**
(43) Date of publication of application: **10.06.2015**
(21) Application number: 14195115.2
(22) Date of filing: 27.11.2014
(51) Int. Cl.: F01D 21/14, F01D 19/00, F02C 3/22, F02C 7/22, F02C 7/26, F01D 21/00

(54) **Method of controlling purge flow in a gas turbomachine and a turbomachine control system**

(30) Priority: 05.12.2013 US 201314098038
(71) Applicant: General Electric Company, Schenectady, New York 12345 (US)
(72) Inventor: SEELY, William Forrester, Greenville, SC South Carolina 29615 (US); ALEXANDER, Michael Joseph, Greenville, SC South Carolina 29615 (US); BOERLAGE, Matthijs Leonardus Gerardus, Greenville, SC South Carolina 29615 (US); CHIECO, Stephen Christopher, Greenville, SC South Carolina 29615 (US)
(74) Representative: Cleary, Fidelma

(57) **Abstract**

A method (100) of controlling purge flow in a gas turbomachine system (2) includes detecting a fault condition in the gas turbomachine system (2), initiating a shutdown of the gas turbomachine system (2), introducing a purge flow into a gas turbine portion (6) of the gas turbomachine system (2), categorizing the fault condition as one of a category one fault and a category two fault, and validating the purge flow if the fault condition is a category one fault and invalidating the purge flow if the fault condition is a category two fault.

## Description

### BACKGROUND OF THE INVENTION

The subject matter disclosed herein relates to the art of turbomachines and, more particularly, to a method of controlling purge flow in a gas turbomachine.

Turbomachines include a compressor portion linked to a turbine portion through a common compressor/turbine shaft and a combustor assembly. An inlet airflow is passed through an air intake toward the compressor portion. In the compressor portion, the inlet airflow is compressed through a number of sequential stages toward the combustor assembly. In the combustor assembly, the compressed airflow mixes with a fuel to form a combustible mixture that is passed into a combustion chamber of a combustor. The combustible mixture is combusted in the combustion chamber to form hot gases. The hot gases are expanded through a number of turbine stages acting upon turbine buckets mounted on wheels to create work that is output, for example, to power a generator, a pump, or to provide power to a vehicle. Exhaust gases from the turbine portion are often times passed to a heat recovery steam generator which creates a steam flow that is passed to a steam turbine portion.

In general, the compressed air and fuel are introduced through a head end of the combustor via one or more fuel nozzles. The combustible mixture combusts in a combustion zone of the combustor and flows to the turbine portion through a transition piece to create work. During a shutdown, air is passed through the turbine portion to purge any combustible products and any remaining products of combustion prior to a restart.

### BRIEF DESCRIPTION OF THE INVENTION

According to one aspect of an exemplary embodiment, a method of controlling purge flow in a gas turbomachine system includes detecting a fault condition in the gas turbomachine system, initiating a shutdown of the gas turbomachine system, introducing a purge flow into a gas turbine portion of the gas turbomachine system, categorizing the fault condition as one of a category one fault and a category two fault, and validating the purge flow if the fault condition is a category one fault and invalidating the purge flow if the fault condition is a category two fault.

According to another aspect of the exemplary embodiment, a turbomachine control system includes a memory, and a computer program product stored in the memory. The computer program product includes program code executable by the turbomachine control system to detect a fault condition in a gas turbomachine system, initiate a shutdown of the gas turbomachine system, introduce a purge flow into a gas turbine portion of the gas turbomachine system, categorize the fault condition as one of a category one fault and a category two fault, and validate the purge flow if the fault condition is a category one fault and invalidate the purge flow if the fault condition is a category two fault.

According to yet another aspect of the invention a turbomachine system includes a compressor portion and a turbine portion operatively connected to the compressor portion. A combustor assembly including at least one combustor is fluidically connected to the compressor portion and the turbine portion. A control system is configured and disposed to perform a method including detecting a fault condition in a gas turbomachine system, initiating a shutdown of the gas turbomachine system, introducing a purge flow into a gas turbine portion of the gas turbomachine system, categorizing the fault condition as one of a category one fault and a category two fault, and validating the purge flow if the fault condition is a category one fault and invalidating the purge flow if the fault condition is a category two fault..

These and other advantages and features will become more apparent from the following description taken in conjunction with the drawings.

### BRIEF DESCRIPTION OF DRAWINGS

The subject matter, which is regarded as the invention, is particularly pointed out and distinctly claimed in the claims at the conclusion of the specification. The foregoing and other features, and advantages of the invention are apparent from the following detailed description taken in conjunction with the accompanying drawings in which:
FIG. 1 is a schematic view of a gas turbomachine system including a control system, in accordance with an exemplary embodiment; and
FIG. 2 is a flow chart illustrating a method of operating the gas turbomachine of FIG. 1.

The detailed description explains embodiments of the invention, together with advantages and features, by way of example with reference to the drawings.

### DETAILED DESCRIPTION OF THE INVENTION

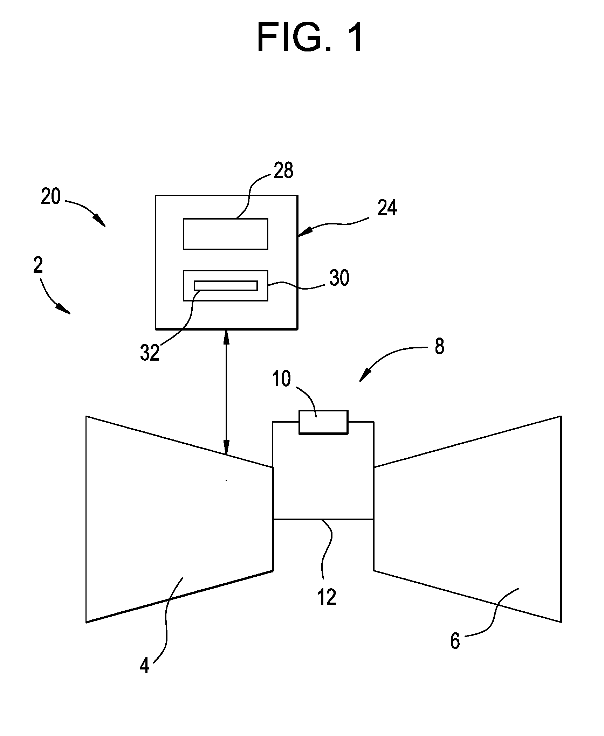

A gas turbomachine system, in accordance with an exemplary, embodiment is indicated generally at 2, in FIG. 1. Turbomachine system 2 includes a compressor portion 4 operatively connected to a turbine portion 6. A combustor assembly 8 including at least one combustor 10 fluidically connects compressor portion 4 and turbine portion 6. A common compressor/turbine shaft 12 mechanically links compressor portion 4 and turbine portion 6. In operation, air is passed into compressor portion 4 through an intake system (not shown). The air is compressed through a plurality of stages (also not shown) and passed to a compressor outlet (not separately labeled). A portion of the air is passed directly to turbine portion 6 to serve as a cooling fluid. Another portion of the compressed air is passed to combustor assembly 8. In combustor 10, the air is mixed with fuel to form a combustible mixture. The combustible mixture is combusted in combustor 10 to form products of combustion that are passed to turbine portion 6 through a transition piece (not shown). The products of combustion expand through turbine portion 6 creating work energy.

Occasionally, a fault may occur in turbomachine system 2 that requires a system shutdown. During a system shutdown, purge air is passed through combustor 10 and turbine portion 6 to remove any combustible fluids prior to a restart. Following the system shutdown, repairs are made and the turbomachine is restarted. Prior to restarting turbomachine system 2 another purge may be required. In accordance with an exemplary embodiment, turbomachine system 2 includes a turbomachine control system 20. Turbomachine control system 20 includes a controller 24 that houses a central processor unit (CPU) 28 and a memory 30. Memory 30 stores a computer program product 32 which, when executed by CPU 28, causes turbomachine control system 20 to evaluate/categorize the fault and determine whether a purge credit may be taken, as will be detailed below.

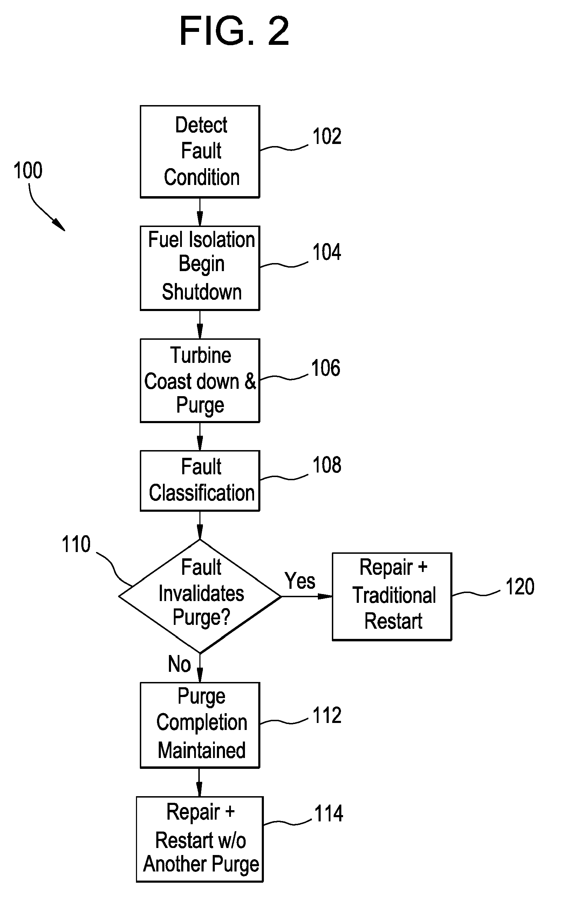

FIG. 2 illustrates a method 100 embodied in computer program product 32. In block 102, a fault condition is detected and a determination is made to shutdown turbomachine system 2. Combustor assembly 8 is isolated from fuel and shutdown begins in block 104. In block 106, turbine portion 6 coasts down and purge air flow is introduced. The purge air flow removes any fuel, combustible fluids, and the like that may remain in turbomachine system 2 following fuel cut-off. In block 108, the fault is classified as either a category one fault or a category two fault. A category one fault represents a non-fuel related fault or any fault that would not invalidate the purge. The category two fault represents a fuel related fault or a fault that would invalidate the purge. A fuel related fault includes any fault or repair process that would allow fuel to enter turbomachine system 2 following the purge.

In block 110, a determination is made if the fault invalidates the purge. If the fault is a category one fault, the purge is maintained, e.g., a purge credit may be issued, in block 112. In block 114, repairs are made and turbomachine system 2 is restarted without the need for an additional purge. In this manner, turbomachine system 2 restart can be carried out more quickly without the need for the additional downtime and expense associated with a second purge. If the fault is a category two fault, repairs are made, an additional purge is performed, and turbomachine system 2 is restarted, as indicated in block 120. Turbomachine control system 20 may be tailored to each particular installation. For example, newer systems include fewer faults that would fall into category two. Turbomachine control system 20 may also be retrofitted to be integrated into existing turbomachine systems.

The technical effects and benefits of the exemplary embodiments include providing a system for categorizing faults which may have led to a shutdown of a turbomachine to determine whether a need for an additional purge is indicated prior to a restart. In this manner, unnecessary purges may be avoided thereby enabling faster restarts and reduced downtime of the turbomachine.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A method (100) of controlling purge flow in a gas turbomachine system (2), the method (100) comprising:
detecting a fault condition in the gas turbomachine system (2);
initiating a shutdown of the gas turbomachine system (2);
introducing a purge flow into a gas turbine portion (6) of the gas turbomachine system (2);
categorizing the fault condition as one of a category one fault and a category two fault; and
validating the purge flow if the fault condition is a category one fault and invalidating the purge flow if the fault condition is a category two fault.

2. The method (100) of claim 1, wherein categorizing the fault condition as a category two fault includes determining whether the fault condition allowed fuel to enter the gas turbomachine system (2).

3. The method (100) of claim 1, wherein categorizing the fault condition as a category two fault includes determining whether the fault condition interrupted the purge flow.

4. The method (100) of claim 1, further comprising: repairing the fault condition and restarting the gas turbomachine system (2) without additional purge flow if the fault condition is a category one fault.

5. The method (100) of claim 1, further comprising: repairing the fault condition and introducing a new purge flow prior to restarting the gas turbomachine system (2) if the fault condition is a category two fault.

6. A turbomachine control system (20) comprising:
a memory (30) for storing a program; and
a computer program product (32) stored in the memory (30), the computer program product (32) including program code executable by the turbomachine control system (20) to:
detect a fault condition in a gas turbomachine system (2);
initiate a shutdown of the gas turbomachine system (2);
introduce a purge flow into a gas turbine portion (6) of the gas turbomachine system (2);
categorize the fault condition as one of a category one fault and a category two fault; and
validate the purge flow if the fault condition is a category one fault and invalidate the purge flow if the fault condition is a category two fault.

7. The turbomachine control system (20) according to claim 6, wherein program code executable by the turbomachine control system (20) to categorize the fault condition in a category two fault includes determining whether the fault condition allowed fuel to enter the gas turbomachine system (2).

8. The turbomachine control system (20) according to claim 6, wherein program code executable by the turbomachine control system (20) to categorize the fault condition as a category two fault includes determining whether the fault condition interrupted the purge flow.

9. The turbomachine control system (20) according to claim 6, wherein the program code executable by the turbomachine control system (20) to repair the fault condition and restart the gas turbomachine system (2) without additional purge flow if the fault condition is a category one fault.

10. The turbomachine control system (20) according to claim 6, wherein the program code executable by the turbomachine control system (20) to repair the fault condition and introduce a new purge flow prior to restarting the gas turbomachine system (2) if the fault condition is a category two fault.

11. A turbomachine system (2) comprising:
a compressor portion (4);
a turbine portion (6) operatively connected to the compressor portion (4);
a combustor assembly (8) including at least one combustor (10) fluidically connected to the compressor portion (4) and the turbine portion (6); and
a turbomachine control system (20) configured and disposed to perform a method (100) comprising:
detecting a fault condition in a gas turbomachine system (2);
initiating a shutdown of the gas turbomachine system (2);
introducing a purge flow into a gas turbine portion (6) of the gas turbomachine system (2);
categorizing the fault condition as one of a category one fault and a category two fault; and
validating the purge flow if the fault condition is a category one fault and invalidating the purge flow if the fault condition is a category two fault.

12. The turbomachine system (2) according to claim 11, wherein categorizing the fault condition as a category two fault includes determining whether the fault condition allowed fuel to enter the gas turbomachine system (2).

13. The turbomachine system (2) according to claim 11, wherein categorizing the fault condition as a category two fault includes determining whether the fault condition interrupted the purge flow.

14. The turbomachine system (2) according to claim 11, further comprising:
repairing the fault condition and restarting the gas turbomachine system (2) without additional purge flow if the fault condition is a category one fault.

15. The turbomachine system (2) according to claim 11, further comprising:
repairing the fault condition and introducing a new purge flow prior to restarting the gas turbomachine system (2) if the fault condition is a category two fault.
